# EUROPEAN PATENT APPLICATION

(11) **EP 1 595 819 A1**
(43) Date of publication of application: **16.11.2005**
(21) Application number: 05447110.7
(22) Date of filing: 13.05.2005
(51) Int. Cl.: B65D 81/34

(54) **Enclosures for food processing**

(30) Priority: 14.05.2004 US 571154 P
(71) Applicant: Bergen, Johan, 3271 Averbode (BE)
(72) Inventor: Bergen, Johan, 3271 Averbode (BE)
(74) Representative: Bird, Ariane

(57) **Abstract**

Food recipients or enclosures are described, such as pouches or bags useful for the preparation of food products at elevated temperatures, such as frying or cooking as well as methods of cooking using the recipients or enclosures. Food containers are described for use in radiant or other heating devices such as all types of toasters or grills or conventional ovens or combination ovens or microwave ovens as well as methods of using such food containers for radiant heat food processing.

## Description

The present invention relates to food recipients or enclosures, such as pouches or bags useful for the preparation of food products at elevated temperatures, such as frying or cooking as well as methods of cooking using the recipients or enclosures. The present invention also relates to food containers for use in radiant or other heating devices such as all types of toasters or grills or conventional ovens or combination ovens or microwave ovens as well as methods of using such food containers for radiant heat food processing. However other heating devices are not excluded.

### Technical background

A food container is known from GB 2 367 806 and US 3891775 which can be used in a toaster to heat process food. The container is made of a woven material which is then coated or impregnated with a non-conductive and heat resistant material. Typically the container is supplied in a black opaque form.

This known container has certain disadvantages. The use of woven material which has to be impregnated or coated increases the cost of making the food container. The opaque nature of the food container means that it is difficult to decide when the food has been processed properly particularly as the end-point of toasting is typically determined by color changes. The woven structure raises question as to whether food particles remain trapped in structure leading to decay and possible contamination if the food container is reused. The black color can also result in the food in the food container being cooked in a different manner than when the food is placed in a toaster without the container as the heating of the food can be mainly by conduction rather than radiant heat.

The preparation of food articles by deep frying can cause different inconveniences such as excessive absorption of fat by the food article, release of food particles in the fat, oil or grease (e.g. breadcrumbs from the coating of the food article), the contamination of the fat, oil or grease by particles and/or aroma's of the food product affecting subsequent preparation of other types of food articles (e.g. release of an unpleasant taste by fish products). Another disadvantage is the generation of fat, oil or grease splashes when a humid food product is placed directly into the heated fat, oil or grease.

Depending on taste and the type of food article being prepared, certain fats or oils may be preferred over others, and some of the speciality oils are quite costly. Using classical frying techniques large amounts of oil are required and the (frequent) change from one type of oil to another is impractical and sometimes costly.

The heating of food products at very high temperatures in an oven in the presence of oils or fats often results in the occurrence of oil or fat splashes contaminating the oven. Though the use of tin foils covering the food product can prevent this, such covering is often not leak-free. The fragility of such foils easily leads to tearing and prevents repeated use.

Several polymeric recipients or wrappings for the heating of food articles are known in the art, such as perforated plastic bags for the cooking of rice, or perforated plastic sheets for covering recipients for use in a microwave oven. Also known is the use of polymers for coating the inner side of recipients used in cooking such as pots and pans.

Also known are laminates of polymers and other materials for encapsulating food products prior to cooking.

### Summary of the invention

It is an object of the present invention to provide a food container for radiant heat food processing which avoids the problems of the known food containers.

It is a further object of the present invention to provide a method of radiant heat food processing which avoids the problems of the known methods using food containers.

The present invention provides a food container having a wall of sheet material which encloses a space for the receipt of a food sample. The sheet material is preferably a non-woven, heat resistant, electrically insulating, flexible plastic sheet material. At least one side of the food container is made translucent or transparent. The sheet material is preferably transparent or translucent to infra-red radiation as emitted in toasters and grills during operation as well as in the optical wavelengths. The sheet material should preferably meet the food hygiene requirements for contact with food, e.g. according FDA standards or to European standard 45001. The sheet material should preferably have anti-adhesive (non-stick) properties up to toasting temperatures, e.g. a temperature of up 150°C, up to 200°C, up to 250°C. An example of suitable sheet material is PTFE, commercially available under the brand name Teflon®

The present invention also includes a method of food heat processing comprising the steps of: placing a food sample into a food container as described above and then subjecting the food sample to heat processing, e.g. in a cooking device such as a toaster, a grill, a traditional oven, a combination oven or a microwave oven or any other cooking, grilling, roasting device.

In another aspect, the present invention is based on the observation that heat resistant synthetic polymer recipients, e.g. enclosures, pouches or bags, provide the ideal solution for the problems associated with traditional frying and cooking methods.

The present invention relates to a food recipient which is made of a synthetic synthetic polymer material that is chemically and physically stable at temperatures above 130 °C, preferably above 150 °C, more preferably above 170°C, even more preferably above 190 °C. The time which the material should withstand this temperature is preferably greater than 5 minutes, more preferably greater than 15 minutes. After cooling it is preferred if the recipient can be re-used. According to the present invention, the synthetic polymer material is non-toxic, i.e. it is not a source of toxic material being released to the food within said recipient nor to the surrounding cooking medium such as oil or fat or grease. It should preferably prevent or at least reduce the transfer of taste or smell from a food article within the recipient to the fat, oil or grease in which the recipient is placed upon use, or visa versa. According to the present invention, the recipient is made of a synthetic polymer which is flexible, and furthermore optionally, transparent, does not stick to the food article, and can be easily cleaned. The polymer is preferably in the form of sheet or foil, for example in the form of cast or extruded sheet or foil or non-woven sheet or foil.

According to a particular embodiment of the invention the synthetic polymer is solid PTFE (Polytetrafluoroethylene). Preferably the solid PTFE is in the form of a sheet or foil.

According to a particular embodiment of the invention, the recipient is essentially non-perforated.

According to a particular embodiment of the invention, the recipient comprises walls whereby the walls are essentially non-perforated.

According to a particular embodiment of the invention the recipient comprises foils forming two facing walls sealed along three edges to define a pouch having an open mouth.

According to yet another particular embodiment of the invention recipient comprises a tab or handle for manipulating the recipient.

The present invention further relates to the use of a recipient with the features as described above for the heating of food. According to a particular embodiment, the heating occurs in oil, fat or grease. In a more particular embodiment the heating occurs is a deep-frying pan or vessel.

A further aspect of the invention relates to a recipient consisting of a homogenous synthetic polymer which is chemically and physically inert above 130°, preferably above 150 °C, more preferably above 170°C, even more preferably above 190 °C and comprising a food article.

In a particular embodiment of this aspect of the invention the food article is frozen.

In another particular embodiment of the invention, the food article comprised within the recipient is coated with breadcrumbs.

In yet another particular embodiment of the invention, the food article comprised within the recipient is fish.

A further aspect of the invention relates to a method for preparing a food product comprising the step of providing the recipient of the invention, i.e. consisting of a synthetic polymer material that is chemically and physically stable at temperatures above 130 °C, introducing the food article into the recipient and placing the recipient at a temperature of more than 130°C or alternatively, ensuring the heating of the food article to a temperature of more than 130°C. According to a particular embodiment, the preparation occurs in oil, fat or grease. In a more particular embodiment the preparation occurs is a deep-frying pan or vessel.

According to a particular embodiment of the invention, this method is used for the grease-free, calorie-reduced preparation of food.

According to another embodiment of the invention the method encompasses adding fat, oil or grease into the recipient.

According to a specific embodiment of the invention the method encompasses placing the recipient in a deep-frying pan or vessel.

### Brief Description of the drawings

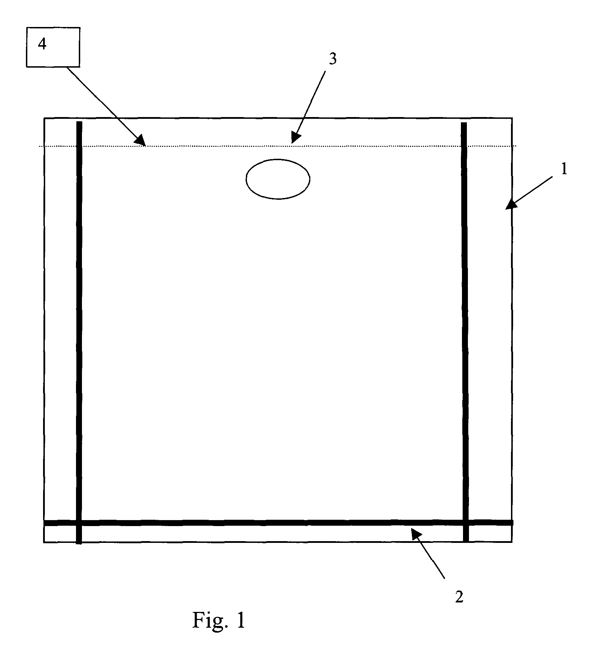

Figure 1 is a schematic representation of a food container according to an embodiment of the present invention.

### Detailed description of the illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where an indefinite or definite article is used when referring to a singular noun e.g. "a" or "an", "the", this includes a plural of that noun unless something else is specifically stated.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

The present invention relates to the use of synthetic polymer recipients for heating food products. Recipients may be in the form of enclosures such as pouches or bags.

When referring to 'heating' of a recipient comprising a food product in the context of the present invention the application of temperatures from about 130°C onwards to about 260 °C, i.e. the contacting of the recipient with these temperatures is envisaged. The application of this temperature can be done in a number of ways. According to a particular embodiment, the recipient is placed in a liquid, more particularly an oil, a fat, or a grease, at a temperature within this range; Alternative cooking methods which can involve the application of temperatures from about 130°C to about 260°C include, but are not limited to, placing the recipient in an oven of which the cavity is heated to a temperature within this range and contacting the recipient with a heat source (such as a stove or hot-plate) which is heated to a temperature within this range. In the context of the use of the synthetic polymer recipients of the present invention in microwave ovens, the direct heating may be essentially limited to the food product or liquids within the recipient (whereby the recipient of the invention may be heated indirectly). Depending on the exact composition of the synthetic polymer, maximal temperatures may vary, but will be below the temperature at which the synthetic polymer, e.g. solid PTFE, becomes chemically and physically unstable. According to a particular embodiment of the invention, heating refers to temperatures between 130°C en 240°C, which are typical temperatures for frying in a deep frying pan or vessel or for preparing a food article in an oven.

'Heating or preparing food or a food article or product' when used herein relates to all processes whereby uncooked, partially cooked, or pre-cooked and optionally prepared food are heated. Such processes include frying or boiling or the like (whereby the food product is partially or totally submerged in a liquid such as oil or fat), and cooking (whereby the food product is heated in an essentially 'dry' state, i.e. without substantial amounts of oil or fat). In the context of the present invention it should be noted that the contacting of the recipient with an oil or fat does not necessarily involve the contacting of the food product therein with an oil or fat or visa versa. Thus, frying of a food article can be achieved by placing the food article in the recipient of the invention in the presence of a substantial amount of fat, oil or grease (optionally the fat, oil or grease can be comprised in the food article) and heating the recipient comprising the food article such as by placing in a deep-frying pan or vessel, in an oven, in a micro-wave oven, or on a hot-plate.

Fig. 1 is a schematic representation of a pouch or food container in accordance with an embodiment of the present invention. It comprises a food container 1 made of non-woven, heat resistant, electrically insulating, flexible plastic sheet material. At least one side of the food container 1 is preferably made translucent or transparent, The sheet material is preferably transparent or translucent to infra-red radiation as emitted in toasters and grills during operation as well as to optical wavelengths. The sheet material should preferably meet the food hygiene requirements for contact with food, e.g. according FDA standards or to European standard 45001. The sheet material should preferably have anti-adhesive (non-stick) properties up to a temperature desired for toasting, e.g. a temperature of up 150°C, up to 200°C, up to 250°C. An example of suitable sheet material is PTFE, commercially available under the brand name Teflon® and having a thickness in the range 0.005 to 2.000 mm.

The food container 1 can be in the form of a tube or pouch. The pouch or tube comprises a wall of sheet material which encloses a space for the receipt of a food sample. The tube or pouch may be fabricated by heat-sealing the sheet material along one or more edges as shown schematically with the reference number 2. The food container may be open along one side to allow escape of hot gasses and to allow entry of a food sample. The back and frond size can be different in order to open the container more easily as indicated by the reference number 4 in the drawing. The food container may be generally flat and rectangular with heat seals along one two or three edges. However, the shape is not consdiered a limitation on the present invention and the shape can be selected to fit the application, for example fit the heating device used. To allow heat sealing low temperature coatings such as low density polythene should not be used. Instead it is preferable if a single layer of the heat resistant, non-stick plastic is used to form the food container, i.e. a single layer of PTFE material. The present invention includes within its scope the use of laminates provided the outer layers are heat resistant and non)-stick.

The heat sealing of PTFE sheets may be carried out using commercially available equipment such as a Vertrod ™ Model 14 OB-TT seal unit.

The dimensions of the food container 1 should preferably such that the food container with food inside will fit into existing toasting and grilling and microwave oven equipment and extend beyond it to make access easy. Dimensions may be typically 100mm to 300 mm along one direction of the container. The food container can include a means for removing the food container from the toaster or grill such as a hole 3.

Although the preferred food container is translucent or transparent the present invention also includes the use of opaque coatings. An example is a metal reflective coating which may be applied to one inner or outer side of the food container. This can be used for grilling from one side whereby the reflective coating reflects heat back onto the food to be processed.

In accordance with an embodiment of the present invention, a food sample such as bread to be heat treated e.g. by radiant heat food processing such as toasting is placed in the food container 1 and the combined container and food introduced into radiant heating device such as a toaster or grill. The food container should be arranged in the radiant heating device such that radiant heat energy enters the food container through the transparent or translucent walls of the container. Due to the heat resistant and translucent nature of the food container, normal processing may be carried out as if the food container were not present. Also the cooking process is a combination of radiant, convective and conductive heat transfer which is similar to that of normal toasting or grilling. After cooking the food container is removed from the heating equipment and the food extracted. The food container may be cleaned and reused if desired.

Additional components may be included in the food container in accordance with the present invention. Examples of these additional components are:
- Temperature or heat sensitive devices for indicating when a specific heat treatment or minimum temperature has been reached. This may be of importance in commercial supply of food when it is desired to demonstrate that food processing has been carried out to a minimum level for the eradication of pathogens. The transparent nature of the food container according to the present invention allows inspection of such a device through the wall of the food container.
- Fluid absorbing material having hydrophilic and/or lipophilic properties

A further particular embodiment of the invention relates to the provision of synthetic polymer recipients for frying food products or heating (optionally pre-fried) food products in a deep-fiying pan or vessel. Thus, according to this aspect of the invention, frying refers to the heating of the recipients in a deep-frying pan or vessel.

'Grease', 'oil' or 'fat' in the context of the present invention relates to any edible synthetic, vegetable or animal suitable fat, oil or grease for heating or frying. 'Grease-free' and 'essentially grease-free' as used herein refers to the fact that the food product within the recipient is brought into contact with no or with only a limited amount of grease, fat or oil, respectively.

A 'food article or product' as used herein refers to any type of edible product. More particularly in the context of the present invention food products which are eaten in a cooked or fried state are envisaged. A non-limiting list of examples of food articles that are traditionally prepared by deep-frying are: spring rolls, French fries, sausages and food products covered with a layer of bread crumbs or pan flour such as croquettes, croquette-like appetisers, hamburgers, vegetables and fish sticks. When referring to a food article or product, fresh, blanched, half-cooked, cooked, cooled, frozen or any other preparation or state of the food product is envisaged when not further specified.

In a first aspect of this embodiment, the invention relates to a recipient for heating food articles at temperatures above 130°C as ensured e.g. in deep frying pans or vessels or ovens.

The recipient of the present invention is entirely made of a synthetic polymer (most usually a polymer foil) which is chemically and physically stable above 130°C, more in particular between 130°C and 260 °C. For most applications whereby the recipient floats in a liquid (fat, oil or grease) or wherein the recipient rests on a support (bottom of a pan, grid in an oven), there is no need for the presence of a reinforcing structure. Thus in a particular embodiment, the recipient of the present invention has homogenous, flat polymer walls. Nevertheless, for some applications, specific structures within the polymer may be envisaged as detailed below.

According to a particular embodiment of the invention the polymer foil of the recipient is solid polytetrafluoroethylene (PTFE) also referred to as Teflon. Solid PTFE is chemically inert, and releases no toxic compounds when heated up to 260°C which makes it suitable for the preparation of food products, in view of health safety and hygiene requirements. A further advantage of Solid PTFE is that it retains its shape and does not expand or shrink upon heating at elevated temperatures. Solid PTFE is heat- (+260 °C) and cold- (-170°C) resistant. Food articles can thus be stored at any temperature, including but not limited to room temperature (17 to 24°C), under cool conditions (e.g. 4 to 6°C) or frozen (-4 to -16°C) in the recipient and the recipient can, when required, immediately be transferred directly to the heating medium e.g. to the fat, oil or grease in a deep frying pan or vessel.

Other synthetic polymers with these properties are equally suitable for the products and the applications of the present invention.

An additional desirable, but not essential feature of the synthetic polymer of the present invention is that it is non-sticking, which allows, even in the absence of fat, oil or grease , easy removal of the prepared food article from the recipient (without damaging either food article or recipient). This also facilitates the cleaning of the recipient and enhances the lifetime of the recipient. Moreover, the material of the invention is preferably also flexible and transparent which allows visual inspection of the cooking process.

The exact features of the recipient of the present invention may vary and be determined by the size, weight, amount and type of food product to be heated in the recipient as well as by the type of heating envisaged. More particularly, according to one embodiment the recipient has a bag-like structure having two or more sides or walls. For optimal heat transfer and visibility, the thickness of the recipient is less than 2 mm, less than 1,5 mm, less than 1mm or less than 0,5 mm. In certain embodiments the thickness of the recipient is about 0,2 or about 0,1 mm. For those applications wherein the recipient is suspended (e.g. some types of roasters or ovens) thicker and stronger foils can be used, although these foils may be less transparent.

Solid PTFE foil is commercially available in different thicknesses. For example, the company Scientific Commodities, Inc., (Arizona, USA) provides solid PTFE with a thickness of 0.16 cm (1/32"), 2 mm, 3 mm, (0.31 cm), 1-16", 5mm, 1/8" (0.63 cm) and even thicker. Films and sheets can be folded and sealed into any size of recipient suitable for containing food articles to be heated.

According to the present invention, a recipient is provided for heating food articles. As indicated above, different forms and sizes of the recipient are envisaged and can be determined by the application, i.e. the type, size and amount of the food product to be heated. Most commonly, tubular or rectangular recipients will be used. When intended for repeated use the recipient of the invention is provided with an optionally closeable opening. For particular applications, a plurality of recipients can be made, e.g. a linear arrangement of recipients, sealed to each other for the simultaneous but individual preparation of the food products comprised therein (e.g. sausages). Moreover, though simple bag-like structures are envisaged to be most practical, it is also envisaged that the walls of the recipient of the invention may comprise three-dimensional structures intended e.g. to maintain the food product in a desired position.

The recipient of the present invention can contain one, but also more than one food article.

According to a particular embodiment the recipient can comprise in its cavity some material, which is capable of absorbing fat, oil or grease or water, released from the food product upon heating. This material, which can be in the shape of a tissue, patch, or individual particles can be either attached to the bottom or sidewall of the recipient or can be present loosely therein.

In view of the applications of the recipient of the present invention the walls of recipient may be perforated or open only to the extent that this will not result in the leakage of the food material or fat, oil or grease comprised in the food recipient upon use.

Thus, according to the present invention, the walls of the recipient are not perforated in those areas of the recipient which come in contact with the fat, oil or grease of the deep frying pan or which come in contact with the bottom of a pan, plate or other cooking device. In comparison with the perforated recipients known from in the art with walls having perforations evenly spread over their entire surface, the recipient of the present invention is thus referred to as 'essentially non-perforated'. In the case where the recipient is intended for placement or suspension in an oven or deep-frying kettle, the bottom and the sides of the recipient are also not perforated. This does not exclude the presence of one or more holes at the top of the recipient for suspension of the recipient to a hook or a rack and/or for release of steam.

According to a particular embodiment of the invention, the recipient is folded and/or optionally sealed at one or more sides and has one open side for the insertion of the food article. For example, the recipient has two facing walls sealed along three edges to define a pouch having an open mouth. In certain embodiments, the open side of the recipient contains a hole or a tab or a handle for manipulating the recipient, e.g. suspending the recipient to a hook or a rack. A part of the recipient can extend at the top-side for facilitating the manipulation of the recipient. The extension can be used to close the recipient into an envelope or box-like structure. This loose fitting allows the release of steam.

The present invention further relates to the use of recipients in accordance with the present invention for the heating of a food article, whereby more in particular the recipient of the invention is exposed to a temperature from about 125°C up to about 260 °C, for example by placing in e.g. a deep frying pan between 130° to 200 °C, or by placing in e.g. an oven between 160 to 240 °C.

Heating of food articles in recipients in accordance with the present invention has a number of advantages. When using a deep-frying pan or vessel it allows for preparing of the food at a desired temperature while preventing the food article from coming into contact with the fat, oil or grease, thus allowing grease-free (and thus reduced or low calorie) cooking of the food product. In addition, the fat, oil or grease does not become contaminated with food particles such as breadcrumbs. Furthermore, the same fat, oil or grease can be used subsequently for preparing different types of food without the risk of transfer of taste or smell (e.g. fish taste) from one type of food to the next. Thus, use of the recipient according to the present invention for the heating of food articles overcomes many of the drawbacks encountered with traditional deep-frying methods.

According to the present invention, non-cooked or partly cooked, e.g. uncooked or parboiled or unfried or complete or partially pre-fried food can be further cooked or fried within the recipient of the present invention, without the need for (additional) fat, oil or grease. Accordingly the preparation of a food article can be performed thereby contacting the food article with a limited amount of or without fat, oil or grease. Raw food can be fried within the recipient of the present invention, thereby contacting the food article with a limited amount of fat, oil or grease.

When the use of fat, oil or grease within the recipient is envisaged, the same or a different fat, oil or grease can be used within the recipient with respect to the fat, oil or grease used in the in the frying pan or vessel.

Food, which contains moisture, will release steam upon heating. The generated steam can either evaporate from the recipient (in the case of an open-ended recipient or recipient provided with an opening) or can be absorbed by an absorbing material. This will avoid the formation of splashes in the fat, oil or grease in the frying pan or vessel, thus resulting in a cleaner and safer frying process.

As indicated above, the recipient of the present invention is also suitable for use in other heating systems, apart from deep frying pans, such as conventional ovens, microwave ovens, pots, pans, hot-plates or other apparatuses for heating food.

Thus in another aspect the present invention provides a method of heating food wherein an uncooked, partially cooked or prepared food article, is first placed inside the recipient of the present invention. Optionally, a certain amount of fat, oil or grease is added to the food or present in the food within the recipient. Consecutively, the recipient comprising the food article (and optionally the oil or fat) is placed in a deep frying pan, oven, microwave oven, or at the bottom of a pan or pot, whereafter the recipient or the food article is heated at the desired temperature for the desired time period.

Another aspect of the invention relates to the recipient of the invention comprising a food article as defined herein. As indicated above, food products may be individually enclosed in the recipient of the invention or several food products may be comprised in one recipient.

## Claims

1. Method of heating a food article recipient a recipient consisting of a homogenous synthetic polymer which is chemically and physically inert above 130°, comprising heating a food article recipient in oil, fat or grease.

2. Method according to claim 1 wherein the synthetic polymer is solid PTFE.

3. Method according to claim 1 or 2 wherein the recipient is non-perforated.

4. Method according to any of claims 1 to 3, wherein the recipient comprises walls, which are essentially non-perforated.

5. Method according to any of claims 1 to 4, wherein the recipient comprises two facing walls sealed along three edges to define a pouch having an open mouth.

6. Method according to any of claims 1 to 5, wherein the recipient comprises a tab or handle for manipulating the recipient.

7. Method according to any of claims 1 to 6, wherein the food article is frozen.

8. Method according to any of claims 1 to 7, wherein the food article is coated with breadcrumbs.

9. Method according to any of claims 1 to 8 wherein the food article is fish.

10. Method according to any of claim 1 to 9 wherein the heating is performed in a deep frying pan.

11. A method for preparing food comprising the step of:
- providing a food article in a recipient consisting of a homogenous synthetic polymer which is chemically and physically inert above 130°,
- placing said recipient at a temperature of more than 130°C in oil, fat or grease.

12. The method of claim 11 which ensures the grease-free preparation of the food.

13. The method according to claim 11 or 12 wherein fat, oil or grease is added into the recipient.

14. A method according to any one of claims 11 to 13 wherein said recipient is placed in a deep-frying pan.

15. A food container having a wall of sheet material which encloses a space for the receipt of a food sample, the sheet material being a non-woven, heat resistant, electrically insulating, flexible plastic sheet material, at least one side of the food container is made translucent or transparent.

16. The food container according to claim 15, wherein the sheet material is transparent or translucent to infra-red radiation as emitted in toasters and grills during operation as well as in the optical wavelengths.

17. The food container of claim 15 or 16, wherein the sheet material has anti-adhesive properties up to toasting temperatures,

18. The food container according to claim 17, wherein the temperature is up 150°C, up to 200°C, up to 250°C.

19. The food container according to any of claims 15 to 18, wherein the sheet material is PTFE.
